Europäisches Patentamt

European Patent Office

Office européen des brevets

(11) Publication number: 0 349 180
A2

## (12) EUROPEAN PATENT APPLICATION

(21) Application number: 89306209.1

(22) Date of filing: 20.06.89

(51) Int. Cl.4: F16C 11/06

(30) Priority: 22.06.88 GB 8814771

(43) Date of publication of application:
03.01.90 Bulletin 90/01

(84) Designated Contracting States:
AT BE CH DE ES FR GB IT LI NL SE

(71) Applicant: WOODVILLE POLYMER
ENGINEERING LIMITED
Alton Lane
Ross-on-Wye Herefordshire HR9 5NF(GB)

(72) Inventor: Gibbons, John Charles
16 Sycamore Close Lincoln Hill
Ross-on-Wye Herefordshire HR9 5UA(GB)

(74) Representative: Chapple, Colin Richard et al
Dowty Group Services Ltd. Patents Dept.
Arle Court
Cheltenham, Glos. GL51 0TP(GB)

(54) A ball joint sealing member.

(57) A ball joint lip sealing member which, in use, forms a lip sealing contact with the ball of a ball joint. The ball joint comprises:
- a securing section, in order to enble mounting of the sealing member in the ball joint;
and
- a sealing section, which has a lip sealing portion.

The sealing section and the lip sealing portion thereof are shaped, and positioned, so that a lip sealing contact is formed with the ball of the ball joint, and the sealing section is deformable so that the lip sealing portion maintains said lip sealing contact with the ball during movement/operation of the ball joint.

The sealing section may be formed as a skirt like member having an arm like cross-section to the member.

FIG.2

# A BALL JOINT SEALING MEMBER

This invention relates to a ball joint lip sealing member, and in particular a ball joint lip sealing member which forms a slip sealing contact with the ball of a ball joint.

With conventional ball joint seals, the seal forms a sealing contact with the ball of the joint which as the ball is moved wipes across the surface of the ball. In practice this provides the seal with an inefficient sealing action which can result in the ingress of dust and dirt particles into the ball joint.

The present invention is concerned with providing a ball joint with a sealing member in which a lip sealing contact is formed with the ball of the ball joint and maintained during movement/operation of the ball joint.

In accordance with the present invention a ball joint lip sealing member which, in use, forms a lip sealing contact with the ball of a ball joint and which comprises:
- a securing section, to enable mounting of the sealing member in the ball joint;
and
- a sealing section, which has a lip sealing portion; wherein the sealing section and the lip sealing portion are shaped, and positioned, so that a lip sealing contact is formed with the ball of the ball joint, and the sealing section is deformable so that the lip sealing portion maintains said lip sealing contact with the ball during movement/operation of the ball joint.

Preferably, the sealing section comprises a skirt like member which extends from the securing section at one end thereof. The skirt like member may comprise a member which in cross-section has an arm like section wherein the lip sealing contact area is formed at the elbow thereof.

The deformable nature of the sealing section enables the lip sealing contact with the ball of the ball joint to be maintained at essentially the same position on the ball during movement of the component parts of the ball joint. This is equally true for both axial and rotary movements of the ball in the ball joint.

During rotary movement the lip sealing contact will act as with a lip sealing contact in a rotary shaft seal, i.e. rotational displacement will occur but the position of the lip sealing contact on the ball will remain substantially constant in position.

Additionally, because the inherent flexibility of the ball joint lip sealing member is made in accordance with the present invention the degree of axial movement available to the ball within the ball joint is greatly enhanced whilst a lip sealing contact is maintained.

This type of ball join seal may be used in all types of ball joints. That is any joint which incorporates a ball/spherical object housed in a socket.

Preferably, the securing section includes a stiffening ring. The stiffening ring may be made from metal or any suitable plastics material.

Preferably, the ball joint sealing member includes a series of web like members disposed between the securing section and the sealing section. The provision of the sealing member with these members enables the sealing member to have a degree of flexibility to rotation displacement, however, provides the sealing member with a degree of rigidity to axial movement.

Preferably, the ball joint sealing member is moulded from elastomeric material.

The invention also includes a ball joint incorporating a ball joint lip sealing member made in accordance with the present invention.

The invention will now be illustrated by way of description of an example, with reference to the accompanying drawings, in which:

Figure 1 shows a plan view of a ball joint sealing member made in accordance with the present invention;

Figure 2 shows a sectional side view of a ball joint sealing member made in accordance with the present invention;

Figure 3A shows a ball joint sealing member made in accordance with the invention, mounted in a body with the ball joint passing therethrough; and

Figures 3B & 3C show a sectional side view of a ball joint, as illustrated in Figures 1 and 2, under operating conditions.

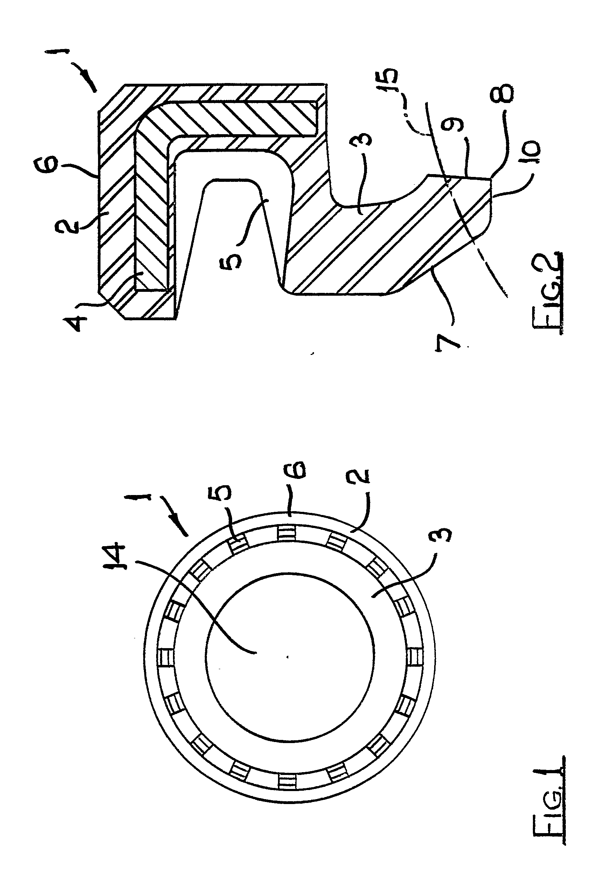

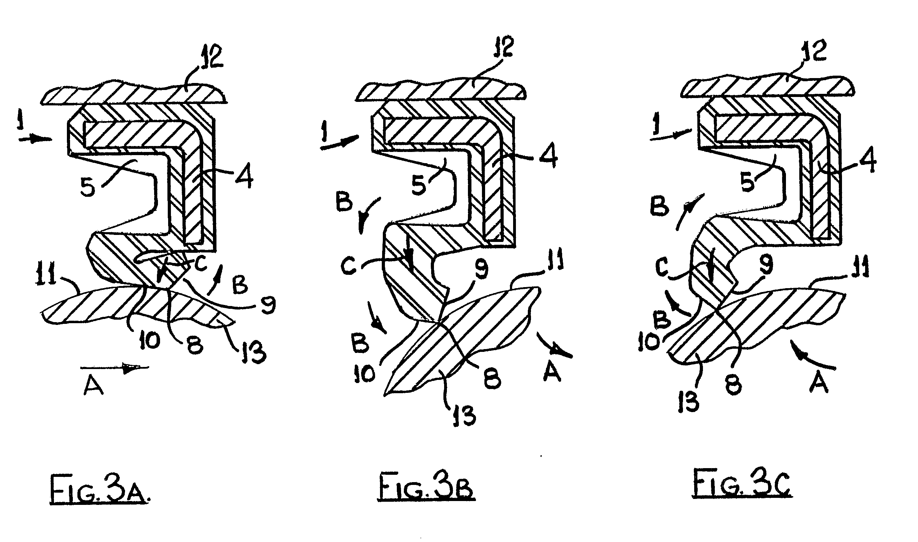

Now referring to Figures 1 and 2 of the drawings, a ball joint sealing member 1 in accordance with the present invention comprises:
- a securing section 2;
- a sealing section 3;
- a metal stiffening ring 4;
and
- a circumferentially extending series of equispaced web sections 5.

The securing section 2, sealing section 3 and web sections 5 are formed by a single moulding operation from an elastomeric material, for example N.B.R. (Nitrile Butadiene Rubber), so that they in combination completely encapsulate the metal stiffening ring 4.

The securing section 2 is formed so that it includes a section 6 which acts as a protective member. The protective member helps to ensure that the ball joint sealing member 1 is correctly mounted in a respective body, whilst helping to prevent/reduce any damage to the sealing member during such mounting.

The sealing section 3 is shaped so that it includes a skirt like member 7 having an arm like cross-section. The skirt like member 7 includes a lip sealing contact area 8, and is shaped on either side of the area 8 to be of a generally V configuration having side surfaces 9 and 10.

The web sections 5 are interdisposed, and extend, between the securing section 2 and the sealing section 3.

Further, with regard to Figure 2 of the drawings a line 15 is included so as indicate the nominal position of the sealing surface with respect to the ball joint sealing member in an unmounted condition.

Now referring to Figures 3A to 3C of the drawings, the deformation/operation of a ball joint sealing member 1 relative to a sealing surface 11 and a body 12, into which ball joint sealing member 1 is mounted is illustrated. The arrows indicate the directions of movement of, as well as the forces applied to of the respective component parts, that is:

Arrow A - the sealing surface 11;

Arrow B - the sealing section 3 and/or arm like member 8;

and

Arrow C - the direction of the net sealing force exerted upon the lip sealing contact area.

In operation the ball joint sealing member 1 is mounted in the body 12 of, for example universal joint (transmission), so that it circumferentially extends around the lip of the socket of a ball joint.

The ball 13, which carries the sealing surface 11, is then moved in the direction of Arrow A of Figure 3A, so that the sealing surface 11 engages the skirt like member 7 of the ball joint sealing member 1. This causes the skirt like member 7 to deform so as to allow the passage, of the ball 13 of the ball joint therethrough during the assembly of the ball joint i.e. movement of the ball of the ball joint in the direction of arrow A.

Once the ball 13 of the ball joint has been inserted through passage 14 of the ball joint sealing member 1 the shaping of the skirt like member 7 is such that the skirt like member 7 is caused to move/flip back and form a lip sealing contact between lip sealing contact area 8 and the sealing surface 11 of the ball joint.

Now referring to Figures 3B and 3C, as the ball 13, and, thereby, sealing surface 11 are moved in the directions indicated by the respective arrows B, the movements indicated by the allows B induce loads in the skirt like member 7 in the directions indicated by the arrows C.

The ball joint may be subjected to any type of motion rotary or axial, and the position of the lip sealing contact area 8 relative to the ball 13 will remain essentially unaffected. However, during rotary motion of the ball joint, the sealing contact area will act as with a rotary shaft seal.

This means that the rotational relationship of the ball joint sealing member 1 to the ball will be altered/adjusted to accommodate the rotational movement. However, the position of the lip sealing contact area as a whole will remain unaffected.

## Claims

1. A ball joint lip sealing member which, in use, forms a lip sealing contact with the ball of a ball joint and comprises:
- a securing section, to enble mounting of the seal in the ball joint;
and
- a sealing section, which has a lip sealing portion; wherein the sealing section and the lip sealing portion are shaped, and positioned, so that a lip sealing contact is formed with the ball of the ball joint, and the sealing section is deformable so that the lip sealing portion maintains said lip sealing contact with the ball during movement/operation of the ball joint.

2. A ball joint lip sealing member as claimed in claim 1, wherein the securing section includes a stiffening ring.

3. A ball joint lip sealing member as claimed in claim 2, wherein the stiffening ring is made of metal.

4. A ball joint lip sealing member as claimed in claim 2, wherein the stiffening ring is made of plastics.

5. A ball joint lip sealing member as claimed in any one of the preceding claims, wherein the sealing section comprises a skirt like member which extends from the securing section at one end thereof.

6. A ball joint lip sealing member as claimed in any one of the preceding claims, wherein the ball joint sealing member includes a series of web like members disposed between the securing section and the sealing section.

7. A ball joint lip sealing member as claimed in any one of the preceding claims, wherein the ball joint sealing member is moulded from elastomeric material.

8. A ball joint incorporating a ball joint lip sealing member as claimed in any one of the preceding claims.

FIG. 1

FIG. 2

EP 0 349 180 A2

FIG. 3A.          FIG. 3B          FIG. 3C

EP 0 349 180 A2